# EUROPEAN PATENT SPECIFICATION

(11) **EP 4 094 569 B1**
(45) Date of publication and mention of the grant of the patent: **14.02.2024**
(21) Application number: 22174871.8
(22) Date of filing: 23.05.2022
(51) Int. Cl.: A01G 3/053, A01D 34/416, A01D 34/90

(54) **POWER TOOL**
ELEKTROWERKZEUG
OUTIL ÉLECTRIQUE

(30) Priority: 26.05.2021 US 202163193324 P
(43) Date of publication of application: 30.11.2022
(73) Proprietor: Techtronic Cordless GP, Anderson, SC 29621 (US)
(72) Inventor: HOFFMAN, Ronald J., Iva, 29655 (US); HOLMAN, Christopher A., Clemson, 29631 (US)
(74) Representative: Novagraaf Group

(56) References cited:
- EP-A1- 2 559 335
- WO-A1-2015/077393
- US-A- 4 244 103
- US-A- 4 426 780

## Description

### FIELD

The present disclosure relates to a trimmer head according to the preamble of claim 1.

### BACKGROUND

Power tools are generally used to perform manual operations without requiring as much manual labor. In particular, trimmers are utilized for trimming grass and weeds. Trimmers generally utilize trimmer line which is spun at high speeds to break the grass and weeds. However, the trimmer line is subject to damage over periods of use and may become broken or ineffective. Accordingly, operators must advance new trimmer line as the existing trimmer line becomes exhausted. Traditional assemblies utilize manual advancement or bump feeds which activate release of additional trimmer line when the power tool is bumped against a surface, e.g., the ground. This can cause damage to the power tool and is not a desirable method of advancing trimmer line.

Accordingly, systems and methods of advancing trimmer line that are easy and do not damage the power tool are desired in the art.

A trimmer head according to the preamble of claim 1 is known from WO 2015/077393 A1. The document refers to a trimmer head having a core that receives the trimmer line thereabout as it is wound into the trimmer head. The core is selectively rotatable relative to the housing. In order to wind and release trimmer line from the trimmer head, a ratchet system and an indexing system are provided. In order to release an amount of string, the user taps the string trimmer head on the ground. In result and knob is depressed further into a housing in an axial upward direction causing the core to move upwardly against the bias of spring. This frees the core to free spin relative to the housing in either direction. The centrifugal force on the line pulls the line outwardly. The line control indexing feature is performed by a number of upward protrusions provided on the upper area of the core. The amount of string released during one bump is controlled by the spacing between stop bars on the upper section of housing.

### BRIEF DESCRIPTION

Aspects and advantages of the invention in accordance with the present disclosure will be set forth in part in the following description, or may be obvious from the description, or may be learned through practice of the technology.

In accordance with one embodiment, a trimmer head according to claim 1 is provided.

In accordance with another embodiment, a method according to claim 8 is provided. The method includes with the cartridge rotating at an operational speed, reducing rotational speed of the drive element for a duration of time such that the cartridge rotates relative to the drive element, wherein the cartridge is configured to dispense trimmer line during at least a portion of the duration of time, and increasing rotational speed of the drive element to rotate the cartridge at the operational speed.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a view of a power tool;
FIG. 2 is an enlarged view of a trimmer head of the power tool;
FIG. 3 is an exploded view of the trimmer head of FIG. 2;
FIG. 4 is a bottom perspective view of a housing of the trimmer head;
FIG. 5 is a top perspective view of a subassembly of the trimmer head;
FIG. 6 is an exploded view of an actuation member of the trimmer head;
FIG. 7 is a cross-sectional view of the trimmer head;
FIG. 8 is a perspective view of a trimmer head in accordance with embodiments of the present disclosure;
FIG. 9 is a cross-sectional view of the trimmer head as seen along Line A-A in FIG. 8 in accordance with embodiments of the present disclosure;
FIG. 10 is a perspective view of a portion of the trimmer head in accordance with embodiments of the present disclosure;
FIG. 11 is a perspective view of a portion of the trimmer head in accordance with embodiments of the present disclosure;
FIG. 12 is a perspective view of a portion of the trimmer head in accordance with embodiments of the present disclosure;
FIG. 13 is a perspective view of a guide of a trimmer head in accordance with embodiments of the present disclosure;
FIG. 14 is a perspective view of a portion of the trimmer head in accordance with embodiments of the present disclosure;
FIG. 15 is a side view of a lifting element of the trimmer head in accordance with embodiments of the present disclosure;
FIG. 16 is a perspective view of the lifting element and an inertial driving element of the trimmer head in accordance with embodiments of the present disclosure;
FIG. 17 is a perspective view of the lifting element in accordance with embodiments of the present disclosure;
FIG. 18 is a perspective view of the inertial driving element in accordance with embodiments of the present disclosure;
FIG. 19 is an inside perspective view of a glider of the trimmer head in accordance with embodiments of the present disclosure;
FIG. 20 is a cross-sectional view of the glider in accordance with embodiments of the present disclosure; and
FIG. 21 is a flow chart of a method of dispensing trimmer line in accordance with embodiments of the present disclosure.

Repeat use of reference characters in the present specification and drawings is intended to represent the same or analogous features or elements of the present invention.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Approximating language, as used herein throughout the specification and claims, is applied to modify any quantitative representation that could permissibly vary without resulting in a change in the basic function to which it is related. Accordingly, a value modified by a term or terms, such as "about," "generally," "approximately," and "substantially," are not to be limited to the precise value specified. In at least some instances, the approximating language may correspond to the precision of an instrument for measuring the value, or the precision of the methods or machines for constructing or manufacturing the components or systems. For example, the approximating language may refer to being within a ±10 percent margin. When used in the context of an angle or direction, such terms include within ten degrees greater or less than the stated angle or direction. For example, "generally vertical" includes directions within ten degrees of vertical in any direction, e.g., clockwise or counter-clockwise.

In general, power tools described in accordance with one or more embodiments herein have trimmer heads with easy-to-replace cartridges and an assembly allowing for quick and easy replacement of the cartridges. In some instances, the cartridges may include pre-wound trimmer line and may be intended for single use. After a cartridge is exhausted of trimmer line, the operator can simply replace the cartridge rather than wind new trimmer line onto the exhausted cartridge. The power tool may thus be easier to service and operate, requiring less down time. In other instances, the cartridges may be manually wound by an operator. While the cartridges may come preloaded with trimmer line, the operator can reuse the cartridges.

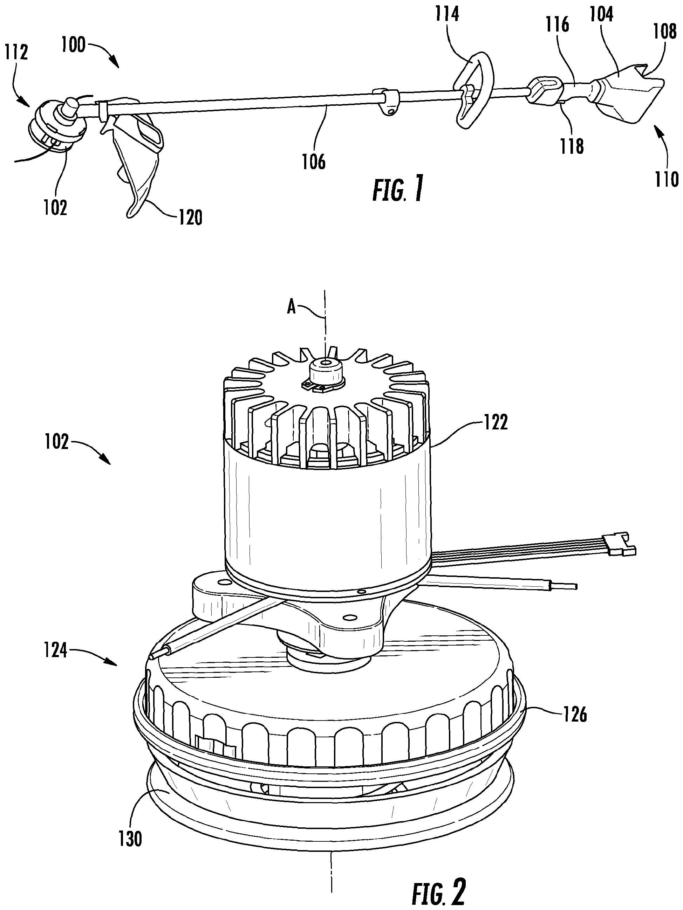

Referring now to the drawings, Fig. 1 to 7 show embodiments that do not form part of the invention but represent background art that is useful for understanding the invention. FIG. 1 illustrates a power tool 100 including a trimmer head 102, a housing 104, and a connecting member 106 extending between the trimmer head 102 and the housing 104. The housing 104 may include a port 108 configured to be electrically connected with a power source, such as a battery (not illustrated) or wall outlet. The port 108 is illustrated as being disposed at a first end 110 of the power tool 100 and the trimmer head 102 is disposed at a second end 112 of the power tool 100. In other embodiments, either one or both of the port 108 or trimmer head 102 can be spaced apart from the first or second end 110 or 112, respectively. In certain instances, the power tool 100 may be electrically powered, e.g., via the battery or through a wall outlet. In other instances, the power tool 100 may be powered by a fuel, such as gasoline.

A handle 114 can be disposed along the connecting member 106, the housing 104, or another portion of the power tool 100. The handle 114 can allow the operator to support the weight of the power tool 100 during operation. A grip 116 can be disposed along the connecting member 106 to permit a second point of contact for the operator. The grip 116 can include, for example, a portion of the connecting member 106 including a user interface 118. The user interface 118 can include a trigger that allows the operator to selectively control the power tool 100. The user interface 118 can further include other controls which permit the operator to effect change to the power tool 100. For instance, by way of non-limiting example, the user interface 118 may include any one or more of a cruise control feature allowing the operator to maintain the operating speed of the trimmer head 102, a turbo which allows the power tool 100 to reach full operational speed, a power switch having at least ON and OFF functionality, a safety, or any other desirable user controls. As described in greater detail below, the user interface 118 can include a trimmer line advance interface configured to selectively feed trimmer line from the cartridge when actuated. In the illustrated embodiment, the grip 116 and user interface 118 are disposed between the handle 114 and the port 108. In other embodiments, the relatively arrangement of the grip 116, user interface 118, handle 114, and port 108 can be adjusted.

In certain embodiments, the power tool 100 can further include a guard 120 configured to protect the operator from flying debris kicked up by the trimmer head 102. In certain instances, the guard 120 can be engaged with the connecting member 106 and be disposed adjacent to the trimmer head 102.

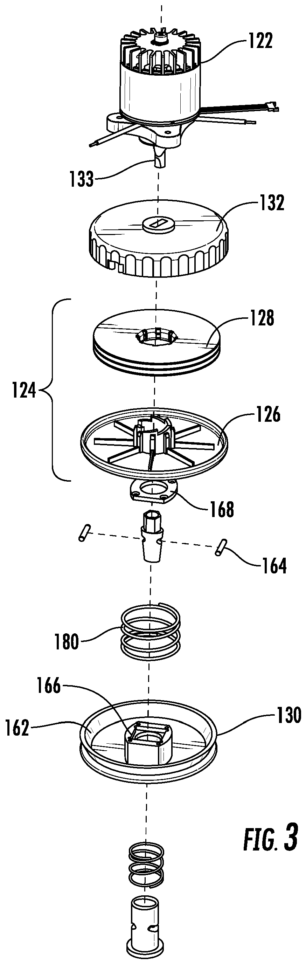

Referring to FIG. 2, the trimmer head 102 can generally include a motor 122 configured to drive a subassembly 124 including a flywheel 126 and a cartridge 128 (FIG. 3) containing trimmer line. The subassembly 124 can be maintained in operative connection with the motor 122 by an actuation member 130. The actuation member 130 can be selectively moved between an engaged configuration in which the subassembly 124 is coupled to the motor 122 and a disengaged configuration in which the subassembly is detachable from the motor 122. Engaging and disengaging the actuation member 130 can be performed by the operator. When engaged, the actuation member 130 can maintain the trimmer head 102 in a ready-to-use configuration. The actuation member 130 may also protect one or more components of the trimmer head 102 from being impacted or contaminated by debris which might induce unintended feeding of trimmer line from the trimmer head 102.

The motor 122 can define an axis of rotation A about which the subassembly 124 is rotatable. In an embodiment, the actuation member 130 may be moveable between the engaged and disengaged configurations by translating the actuation member 130, or a portion thereof (as described in greater detail below), in a direction generally along the axis of rotation A. For example, in an embodiment, the actuation member 130 can be moved to the engaged configuration by translating the actuation member 130, or a portion thereof, along the axis of rotation A in a direction towards the motor 122. The actuation member 130 can be moved to the disengaged configuration by translating the actuation member 130, or a portion thereof, along the axis of rotation A in a direction away from the motor 122. In another embodiment, these directions may be switched such that the actuation member 130 is moved to the engaged configuration by translating the actuation member 130, or a portion thereof, along the axis of rotation A in a direction away from the motor 122 and moved to the disengaged configuration by translating the actuation member 130, or a portion thereof along the axis of rotation A in a direction toward the motor 122.

FIG. 3 illustrates an exploded view of the trimmer head 102. A housing 132 can be disposed between the motor 122 and the cartridge 128. In an embodiment, the housing 132 can be rotationally keyed with the motor 122 such that rotational input from the motor 122 causes the housing 132 to rotate. A shaft 133 of the motor 122 can extend through the housing 132 and pass through at least a portion of the subassembly 124. In certain instances, the shaft 133 can rotatably drive the housing 132.

In an embodiment, the housing 132 can be disposed between the subassembly 124 and the motor 122. In an embodiment, the cartridge 128 can be disposed between the flywheel 126 and the housing 132. In an embodiment, the flywheel 126 may extend radially beyond the housing 132 such that a portion of the flywheel 126 is exposed from the trimmer head 102. In an embodiment, the subassembly 124 can be disposed between the housing 132 and the actuation member 130. It should be understood that other spatial arrangements are contemplated herein and that the above-described relative positions of the elements are exemplary only.

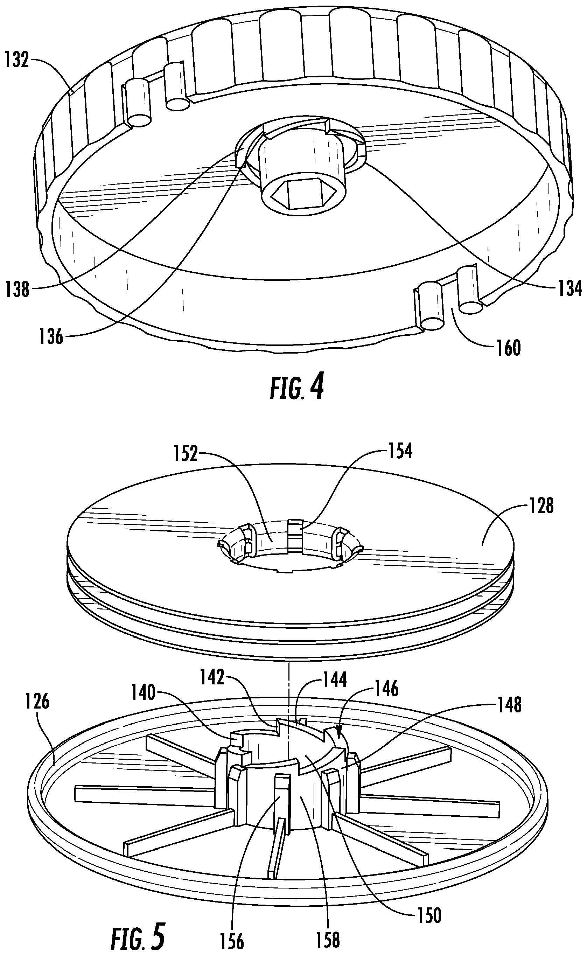

Referring to FIG. 4, the housing 132 can include one or more rotational drivers 134. The rotational drivers 134 may include one or more driver surfaces 138 and one or more guides 136 disposed between the driver surfaces 138. In an embodiment, the one or more guides 136 can lie along planes that extend generally parallel with the axis of rotation A. The one or more driver surfaces 138 can transition the surface of the one or more rotational drivers 134 between successive guides 136. That is, the rotational drivers 134 can include alternating driver surfaces 138 and guides 136. The cartridge 128 or flywheel 126 can be biased against the rotational drivers 134 such that friction between the cartridge 128 or flywheel 126 and the rotational drivers 134 causes the cartridge 128 and flywheel 126 to rotate. Braking impulse causes the flywheel 126 and cartridge 128 to slip relative to the rotational drivers 134, allowing the cartridge 128 to rotate relative to the trimmer head 102 and feed out trimmer line.

The subassembly 124 may include one or more rotational drivers configured to engage with the one or more rotational drivers 134 of the housing 132 to rotatably drive the subassembly 124. For example, referring to FIG. 5, in an embodiment, the one or more rotational drivers of the subassembly 124 may include one or more rotational drivers 140 disposed on the flywheel 126. The one or more rotational drivers 140 of the flywheel 126 can include one or more driver surfaces 142 and one or more guides 144 extending between the driver surfaces 142. Similar to the driver surfaces 138, in an embodiment, the driver surfaces 142 of the flywheel can extend generally parallel with the axis of rotation A. The one or more guides 144 can transition the surface of the one or more rotational drivers 140 between the successive driver surfaces 142. That is, the rotational drivers 140 can include alternating driver surfaces 142 and guides 144 to form ramps between adjacent driver surfaces 142.

In an embodiment, the one or more rotational drivers 140 of the flywheel 126 can be complementary to the one or more rotational drivers 134 of the housing 132. The one or more rotational drivers 140 of the flywheel 126 can selectively interface with the one or more rotational drivers 134 of the housing 132. When interfaced, the one or more rotational drivers 134 of the housing 132 can drive the flywheel 126. When not interfaced, the one or more rotational drivers 134 of the housing 132 can rotationally move relative to the flywheel 126, allowing independent movement between the housing 132 and the flywheel 126. This can sometimes be referred to as slip, or skipping, and can occur when rotation of the housing 132 is slowed/stopped (e.g., as a result of slowing/stopping the motor 122) and the subassembly 124 continues to rotate. In certain instances, this slipping movement can incur a tactile indication to the operator that the slipping is occurring. In other instances, the slipping movement can incur an audible indication, a visual indication, or another indication to the operator that the slipping is occurring.

As depicted in FIG. 5, in a particular embodiment the one or more rotational drivers 140 of the flywheel 126 may be disposed along an upper surface 146 of a central hub 148 of the flywheel 126. The central hub 148 may define a central aperture 150 extending through the flywheel 126 in a direction generally parallel with the axis of rotation A (FIG. 2). In certain instances, the shaft 135 extending from the motor 122 can extend through the central aperture 150. In other instances, one or more attachments to the shaft 135 can extend through the central aperture 150.

The cartridge 128 can define a central aperture 152 configured to receive the central hub 148 of the flywheel 126. The cartridge 128 and flywheel 126 can be keyed together. That is, for example, the cartridge 128 and flywheel 126 can be rotationally keyed together such that rotational input on either one or both of the cartridge 128 or flywheel 126 can cause the other of the cartridge 128 or flywheel 126 to rotate. By way of example, and referring to FIG. 5, the cartridge 128 and flywheel 126 can be keyed together by an interface 154 formed along the central aperture 152 of the cartridge 128 and an interface 156 formed along an outer surface 158 of the central hub 148. In the illustrated embodiment, the interface 154 of the cartridge 128 includes a plurality of radially extending recesses which are configured to receive radially extending protrusions of the flywheel 126. The protrusions can extend into the recesses such that relative rotation along the axis of rotation A is prevented. The protrusions and recesses can extend in a direction parallel with, or generally parallel with, the axis of rotation A such that the cartridge 128 and flywheel 126 can be readily joined together. For instance, the operator can interface the cartridge 128 and flywheel 126 together by translating at least one of the cartridge 128 and flywheel 126 in a direction parallel with, or generally parallel with, the axis of rotation A. Once joined together, the subassembly 124 may be formed. Additional attachment protocol can be included to more rigidly join the cartridge 128 and flywheel 126 together. For instance, in certain embodiments, the cartridge 128 and flywheel 126 can be further coupled together by one or more fasteners, e.g., threaded or non-threaded fasteners (not illustrated).

In certain instances, the cartridge 128 can be a single-use cartridge. Single-use cartridges allow the operator to replace exhausted cartridges without having to wind trimmer line. That is, the operator can dispose of each cartridge 128 after exhausting the trimmer line associated with that cartridge and replace the exhausted cartridge with a new cartridge already having trimmer line wound thereon. In this regard, replacement of the trimmer line does not require the operator to wind new trimmer line. Instead, the operator can simply replace the exhausted cartridge and resume operation of the power tool 100. In certain instances, the cartridge 128 can be made using recycled materials. In an embodiment, the cartridge 128 can be reusable. For example, the operator can manually wind trimmer line to the cartridge 128. In this regard, the operator is not left with an unusable cartridge 128 after the trimmer line is depleted.

In an embodiment, the cartridge 128 can be formed from a relatively lightweight material. For instance, by way of non-limiting example, the cartridge 128 can be formed from a plastic having a relative low density. The relatively lightweight material of the cartridge 128 can reduce costs associated with manufacturing and make it easier to store/transport the cartridges. Meanwhile, the flywheel 126 can be formed from a relatively heavier material as compared to the material of the cartridge 128. Use of terms "relatively lightweight" and "relatively heavier" are intended to refer to comparative weights of the cartridge 128 relative to the flywheel 126. Moreover, the relative weights of the cartridge 128 and flywheel 126 may be a result of material selection, design choice, or a combination thereof. For instance, the flywheel 126 may be formed from a material having a density similar to the density of the cartridge 128, however, the mass distribution may put more mass near an outer edge of the flywheel 126 such that the flywheel has a higher moment of inertia.

The flywheel 126 and cartridge 128 can turn together. In an embodiment, the moment of inertia is at least a partial sum of the moments of inertia of the flywheel 126, the cartridge 128, and even the trimmer line wound on the cartridge 128. There may also be centrifugal force pulling on the trimmer line protruding from the trimmer head 102. The moment of inertia, in addition to the centrifugal force of the trimmer line, may allow for feeding of trimmer line.

In an embodiment, the flywheel 126 can have a moment of inertia that is greater than a moment of inertia of the cartridge 128. That is, for example, the flywheel 126 may carry more rotational energy than the cartridge 128 itself. In this regard, use of a relatively lightweight cartridge 128 can allow for trimmer line feeding.

Trimmer line is generally expended during operational use of the power tool 100. For example, when performing trimming operations, the trimmer line can become worn or frayed. For instance, upon contacting hard surfaces like rocks, walls, and posts at high speeds, the trimmer line can break. To continue operations after fraying or breaking, additional trimmer line must be dispensed (or fed) from the cartridge 128. Traditional power tools using trimmer line dispense additional trimmer line using a bump feed method. Under this method, the operator bumps the power tool against the ground which allows trimmer line to be dispensed. However, bumping the power tool against the ground can cause damage to the power tool. Moreover, the ability to precisely dispense trimmer line is greatly limited in bump feed power tools. Yet further, the components of the power tool that enable bump feed can be cumbersome and difficult to assemble.

In one or more embodiments described herein, the operator can dispense trimmer line without contacting the trimmer head 102 against a secondary surface, e.g., the ground. Using the one or more rotational drivers 134 of the housing 132 and the one or more rotational drivers 140 of the subassembly 124, the operator can selectively dispense trimmer line. For example, by terminating rotation of the motor 122 completely for a duration of time or slowing the motor 122 for a duration of time, the rotational drivers 140 can slip (or skip) relative to the rotational drivers 134 as the moment of inertia of the subassembly 124 is sufficiently large so as to overcome the resistance created by the rotational drivers 134 and 140. In this regard, the cartridge 128 can move relative to the housing 132, allowing trimmer line to feed (dispense) through one or more openings 160 in the housing 132. The motor 122 can then resume operational speed upon which the one or more rotational drivers 140 can engage with the one or more rotational drivers 134 to drive the cartridge 128 and continue trimming operations.

Slowing or stopping the motor 122 to dispense trimmer line can alternatively be performed using a clutch or other slip element which allows for relative motion between the motor 122 and the subassembly 124. That is, while the description herein for dispensing trimmer line is described as being performed by changing an operational characteristic of the motor 122 (e.g., slowing or stopping the motor 122), in certain embodiments, the changing operational characteristic can be performed by a secondary element, like a clutch, in communication with the motor 122.

As described above, the cartridge 128 can be a single-use cartridge to prevent the operator from having to wind new trimmer line every time the trimmer line is exhausted. To allow for rapid cartridge changing, the trimmer head 102 can define a quick-release system including, for example, the aforementioned actuation member 130.

Referring to FIG. 3, the actuation member 130 can generally include an engageable portion 162 configured to be operated on by the operator and translate in a direction along the axis of rotation A. The actuation member 130 can further include one or more engagement pins 164 configured to be coupled with the engageable portion 162. In an embodiment, the engagement pins 164 can be configured to translate in a direction generally perpendicular to the axis of rotation A as the engageable portion 162 translates along the axis of rotation A. Thus, when the operator moves the engageable portion 162, the engagement pins 164 can move between an engaged configuration and a disengaged configuration.

In an embodiment, the engagement pins 164 can be disposed within a portion of the engageable portion 162. For instance, the engagement pins 164 can be disposed within a recess 166 of the engageable portion 162. The engagement pins 164 may be retained in the recess 166 by a cover 168. The cover 168 may be selectively engageable with the engageable portion 162 to retain the engagement pins 164 in the recess 166.

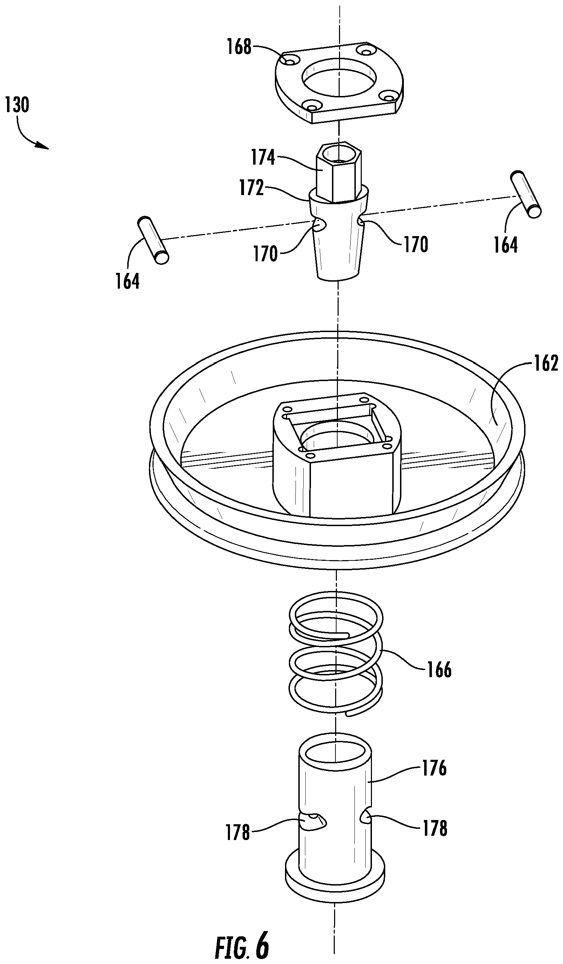

FIG. 6 illustrates an enlarged view of the actuation member 130 including the engageable portion 162, the engagement pins 164, and the cover 168.

The actuation member 130 can further include at least one biasing element 166, e.g., a spring, configured to bias the engageable portion 162 in a direction generally parallel with the axis of rotation A. For instance, the biasing element 166 can be configured to bias the engageable portion 162 towards the engaged configuration.

The engagement pins 164 may be configured to selectively maintain the actuation member 130 in the engaged configuration when the engagement pins 164 are disposed within slots 170. The slots 170 may be part of a locking drive shaft 172 which is engaged, e.g., rotationally keyed, with the drive shaft 133 from the motor 122. As illustrated in FIG. 6, the locking drive shaft 172 can include a shaped interface 174 which is configured to be coupled with a complementary interface (not illustrated) of the drive shaft 135. In the depicted embodiment, the shaped interface 174 includes a polygonal shape having six sides. The complementary interface of the drive shaft 135 can have a corresponding polygonal shape with six sides that mate with the shaped interface 174. Other designs are possible for the shaped interface 174 including other polygonal shapes, arcuate shapes, or shapes having arcuate and polygonal portions. In yet a further embodiment, the drive shaft 135 may be coupled to the locking drive shaft 172 using a fastener, an adhesive, or the like. In yet other embodiments, the drive shaft 135 may be integral with the locking drive shaft 172. That is, the drive shaft 135 and locking drive shaft 172 may be formed from a single piece, i.e., the drive shaft 135 and locking drive shaft 172 may be integral with one another.

When the engagement pins 164 are disposed within the slots 170 of the locking drive shaft 172, the engageable portion 162 may be retained in the engaged configuration. In the depicted embodiment, this occurs when the engagement pins 164 are at a radially innermost location. When the engagement pins 164 are displaced from the slots 170 of the locking drive shaft 172, the engageable portion 162 may be removable. In the depicted embodiment, this occurs when the engagement pins 164 are displaced radially outward from the radially innermost location. It should be understood that the above description and illustrated embodiment are exemplary only. Other spatial arrangements may be possible without deviating from the scope of the disclosure.

The actuation element 130 can further include a guide 176 configured to guide the engagement pins 164 between the radially innermost location (i.e., the engaged configuration) and a radially displaced location (i.e., the disengaged configuration). The guide 176 can include, for example, guide slots 178 configured to guide the engagement pins 164. The guide slots 178 can generally define a canted interface angularly offset from the axis of rotation A. For instance, the guide slots 178 can define best fit lines that are angularly offset from the axis of rotation A by at least 5 degrees, such as at least 10 degrees, such as at least 15 degrees, such as at least 20 degrees, such as at least 25 degrees, such as at least 30 degrees, such as at least 45 degrees.

The engagement pins 164 can be in the radially innermost location (i.e., the engaged configuration) when at a radially innermost location of the guide slots 178. Conversely, the engagement pins 164 can be radially displaced from the radially innermost location (i.e., moved to the disengaged configuration) when displaced from the radially innermost location of the guide slots 178. Since the guide slots 178 are canted, axial movement of the engageable portion 162 along the axis of rotation A can cause the engagement pins 164 to displace in the radial direction. This displacement in the radial outward direction can free the engagement pins 164 from the slots 170 of the locking drive shaft 172, permitting the engagement pins 164 to clear the locking drive shaft 172 and permitting removal of the engageable portion 162 from the trimmer head 102. It is noted that in accordance with at least one embodiment, the radial depth of the guide slots 178 can be greater than the radial depth of the slots 170. In this regard, the engagement pins 164 can remain in the guide slots 178 while allowing clearance relative to the slots 170. In turn, this can maintain coupling between the guide 176 and the engageable portion 162.

Referring again to FIG. 3, a secondary biasing element 180 can be configured to bias the subassembly 124 away from the actuation element 130. The biasing element 180 can include, for example, a spring. In certain instances, the secondary biasing element 180 can bias the subassembly 124 such that the one or more rotational drivers 134 of the housing 132 maintain engagement with the one or more rotational drivers 140 of the subassembly 124. Relative rotational displacement of the subassembly 124 and housing 132 can occur, for example, when the secondary biasing element 180 is compressed.

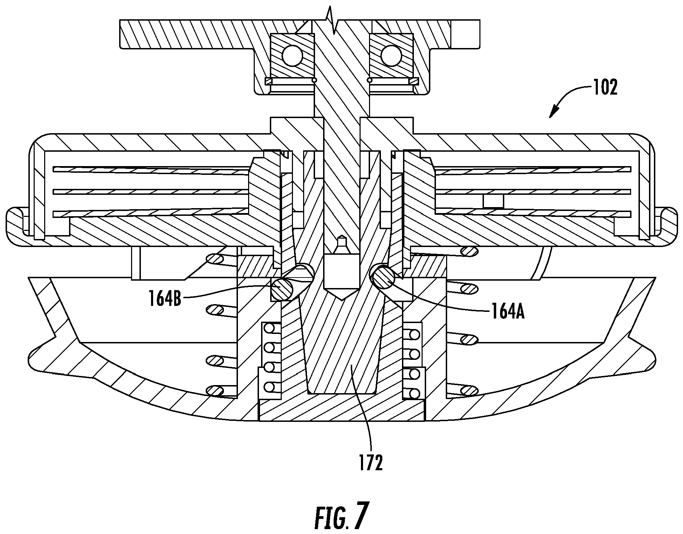

FIG. 7 illustrates a cross-sectional view of the trimmer head 102 as seen in accordance with an exemplary embodiment. The right engagement pin 164A is depicted in the engaged configuration. In this configuration, the engagement pin 164A is disposed at a position whereby the locking drive shaft 172 is not displaceable. The left engagement pin 164B is depicted in the disengaged configuration. In this configuration, the engagement pin 164B is disposed at a position whereby the locking drive shaft 172 is displaceable.

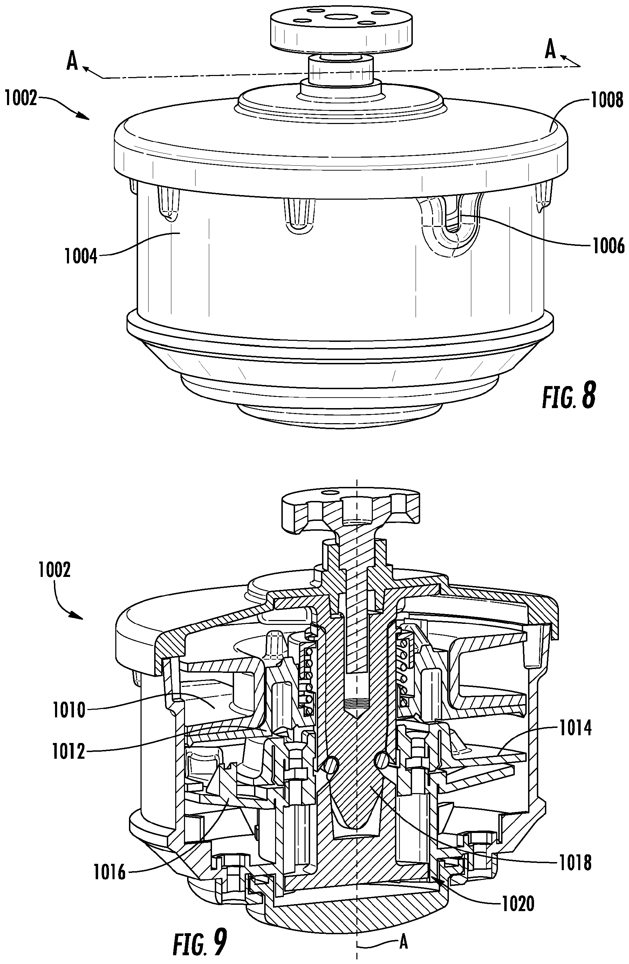

FIGS. 8 to 18 illustrate a trimmer head 1002 in accordance with embodiments of the present invention. Referring initially to FIG. 8, the trimmer head 1002 can generally include a housing 1004 defining one or more openings 1006 through which trimmer line (not shown) can extend through. The opening 1006 depicted in FIG. 8 is slotted from an axial end of the housing 1004, i.e., the opening 1006 is not defined on all sides (e.g., closed) by the housing 1004. In this regard, the housing 1004 can be detached from a cover 1008 by translating the housing 1004 away from the cover 1008 without pulling the trimmer line through the openings 1006.

FIG. 9 illustrates a cross-sectional view of the trimmer head 1002 as seen along Line A-A in FIG. 8. As illustrated, the trimmer head 1002 includes a subassembly including any one or more of a cartridge 1010, a flywheel 1012, a lifting element 1014, and an inertial driving element 1016. The subassembly can be configured to rotate about a central axis A. The central axis A can be defined by a drive shaft 1018 configured to rotatably drive at least one of the cartridge 1010, flywheel 1012, lifting element 1014, and inertial driving element 1016. In certain instances, the drive shaft 1018 can have a non-circular cross-sectional shape. That is, for example, the drive shaft 1018 can have an oblong cross section as viewed along the central axis A. The drive shaft 1018 may define any other shape.

An actuation member 1020 may selectively retain the subassembly in the engaged, i.e., closed, configuration, e.g., using the method as described with respect to the actuation member 130. In another embodiment, the actuation member 1020 may utilize a different system for engaging the subassembly relative to the trimmer head 1002 to allow the trimmer head 1002 to be used in operation.

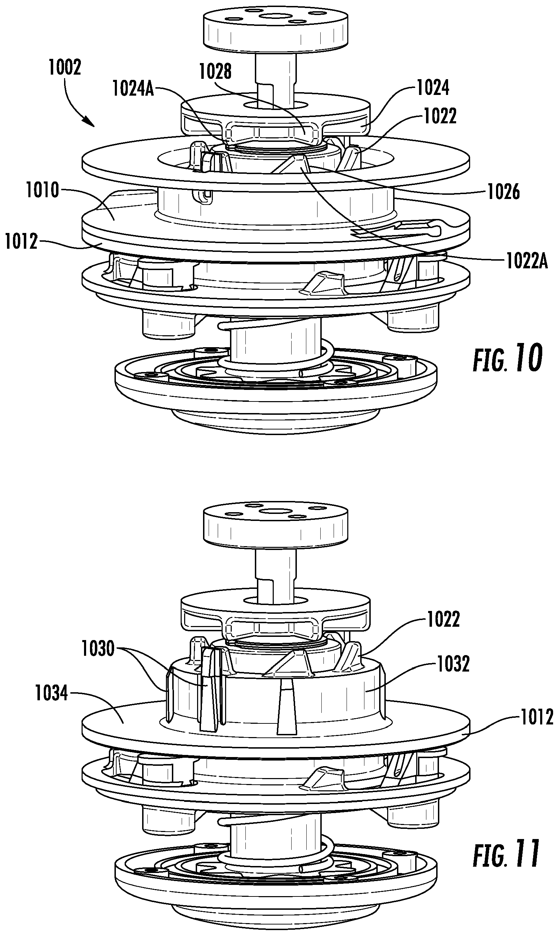

FIG. 10 illustrates an embodiment of a portion of the trimmer head 1002 with the cover 1008 removed. As depicted, the flywheel 1012 can include a stop assembly including one or more rotational stops 1022. In an embodiment, the one or more rotational stops 1022 can include at least two rotational stops, such as at least three rotational stops, such as at least four rotation stops, such as at least five rotational stops, such as at least six rotational stops. The rotational stops 1022 can be spaced apart from one another. More particularly, the rotational stops 1022 can be equally spaced apart from one another about the central axis A. At least one of the rotational stops 1022, such as all of the rotational stops 1022, can interface with one or more complementary stops 1024 of the trimmer head 1002.

The rotational stops 1022 can define, for example, stop surfaces 1026 configured to interface with stop surfaces 1028 of the complementary stops 1024. The stop surfaces 1026 and 1028 may be spaced apart from one another in a direction along the central axis A, i.e., axially, when the flywheel 1012 is not being actively stopped.

During operational use, the stop surfaces 1026 and 1028 can be spaced apart from one another. As described in greater detail below, the flywheel 1012 can translate along the central axis A, i.e., axially, towards the complementary stops 1024 when motor braking occurs. As used herein, motor braking may refer to braking of the motor, stopping of the motor, reducing power to the motor, or the like such that rotational speed of the motor drops. In a particular embodiment, motor braking may occur for a duration of time less than 1 second, such as less than 500 milliseconds, such as less than 250 milliseconds, such as less than 150 milliseconds. In a particular embodiment, motor braking occurs for approximately 100 milliseconds. As described below, the inertial driving element 1016 can carry enough angular momentum going into the braking period so as to displace the flywheel 1012 in a direction along the central axis A, i.e., axially.

The rotational stops 1022 can interface with the complementary stops 1024 during motor braking, i.e., as the flywheel 1012 displaces. In this regard, the complementary stops 1024 can limit rotational travel of the flywheel 1012, e.g., to a prescribed rotational displacement. For instance, as depicted in FIG. 10, a first rotational stop 1022A is rotationally spaced apart from a first complementary stop 1024A by an angle, as measured about the central axis A. As the flywheel 1012 translates towards the complementary stops 1024, the flywheel 1012 may also rotate relative to the complementary stops 1024 until the first rotational stop 1022A contacts the first complementary stop 1024A. In such a manner, the rotational stops 1022 and the complementary stops 1024 can limit a maximum angle of rotational displacement of the flywheel 1012 with respect to the rotational stops 1024. Since trimmer line is fed from the cartridge 1010 through the openings 1006 during relative rotational displacement between the rotational stops 1022 and the complementary stops 1024, the angular displacement allowed before the rotational stops 1022 contact the complementary stops 1024 can correspond with an amount of trimmer line fed through the openings 1006. By way of non-limiting example, in an embodiment it may be desirable to release trimmer line in 1 inch increments. Accordingly, the rotational stops 1022 and complementary stops 1024 can be rotatably displaced from one another when the trimmer head 1002 is being driven by the motor by an angle which corresponds with 1 inch of displacement of the trimmer line.

After the complementary stops 1024 successfully interface with the rotational stops 1022 to stop relative rotation between the flywheel 1012 and housing 1004, the flywheel 1012 may translate away from the complementary stops 1024, i.e., axially, until the rotational stops 1022 are rotatably clear of the complementary stops 1024. After clearing the complementary rotational stops 1024, the rotational stops 1022 may be free to rotate, permitting renewed operation of the trimmer head 1002 without dispensing further trimmer line.

While the above description is directed to rotational stops 1022 disposed on the flywheel 1012, in another embodiment, the rotational stops 1022 may be disposed directly on the cartridge 1010. For instance, the dual cartridge-flywheel subassembly described above may be replaced with only a cartridge 1010.

FIG. 11 illustrates an embodiment of a portion of the trimmer head 1002 as depicted in FIG. 10 with the cartridge 1010 removed. As depicted in FIG. 11, the flywheel 1012 can include an interface 1030 configured to rotatably key the flywheel 1012 with the cartridge 1010. The interface 1030 can include a plurality of interfaces, such as, e.g., two or more splines, configured to interface with the cartridge 1010. In a particular embodiment, the interface 1030 can be configured to release the cartridge 1010 in an axial direction, i.e., the splines may be oriented parallel, or generally parallel, with the central axis A.

As depicted in FIG. 11, the rotational stops 1022 can be disposed along a central hub 1032 of the flywheel 1012. The cartridge 1010 can seat around the central hub 1032 and rest along a flange 1034 of the flywheel 1012. The rotational stops 1022 can project axially from the flywheel 1012. In the depicted embodiment, the rotational stops 1022 can project towards an upper side of the trimmer head 1002, i.e., away from the ground. In a non-depicted embodiment, the rotational stops 1022 can project downward towards the ground. In yet another embodiment, the rotational stops 1022 may project radially.

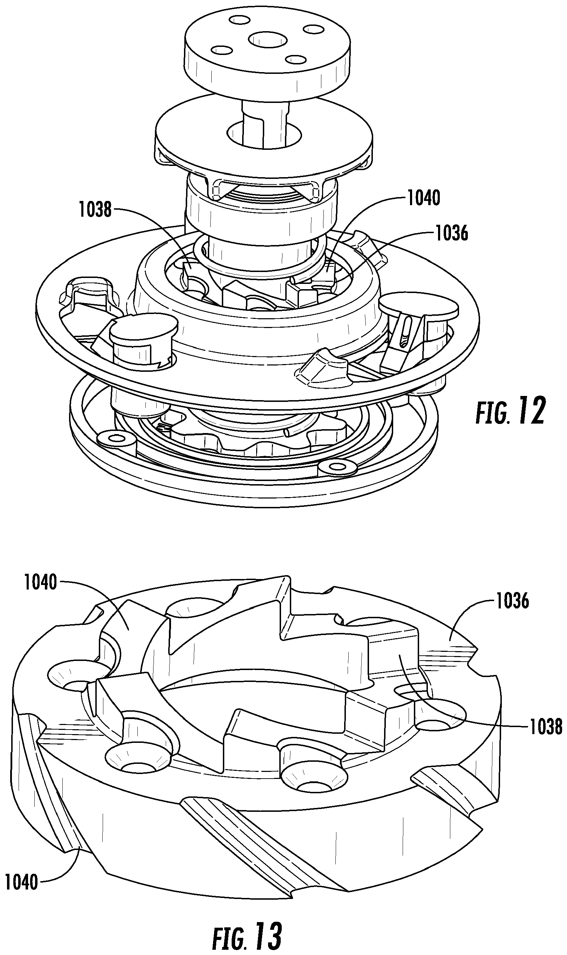

FIG. 12 illustrates an embodiment of a portion of the trimmer head 1002 as depicted in FIG. 11 with the flywheel 1012 removed. As depicted in FIG. 12, the trimmer head 1002 may include a guide 1036 defining one or more driving portions 1038. The driving portions 1038 may include, for example, ramped interfaces defining drive surfaces 1040 and slip surfaces 1042. The driving portions 1038 may be configured to interface with the flywheel 1012 (or another element such as, e.g., directly interface with the cartridge 1010) and rotatably drive the flywheel 1012 (or other element).

FIG. 13 illustrates a perspective view of the guide 1036 in accordance with an exemplary embodiment. The guide 1036 may include a mating interface 1040 disposed, e.g., along an outer surface 1042 of the guide 1036. The mating interface 1040 can include, for instance, a channel extending into the guide 1036. In a nonillustrated embodiment, the mating interface 1040 can define a spline extending away from the guide 1036. Other mating interface 1040 structures are contemplated herein.

The mating interface 1040 may include a plurality of mating interfaces, such as for example, at least two mating interfaces, such as at least three mating interfaces, such as at least four mating interfaces, such as at least five mating interfaces, such as at least six mating interfaces. The mating interfaces 1040 can be spaced apart from one another about the perimeter of the guide 1036. In a particular embodiment, the mating interfaces 1040 can be equally spaced apart from one another.

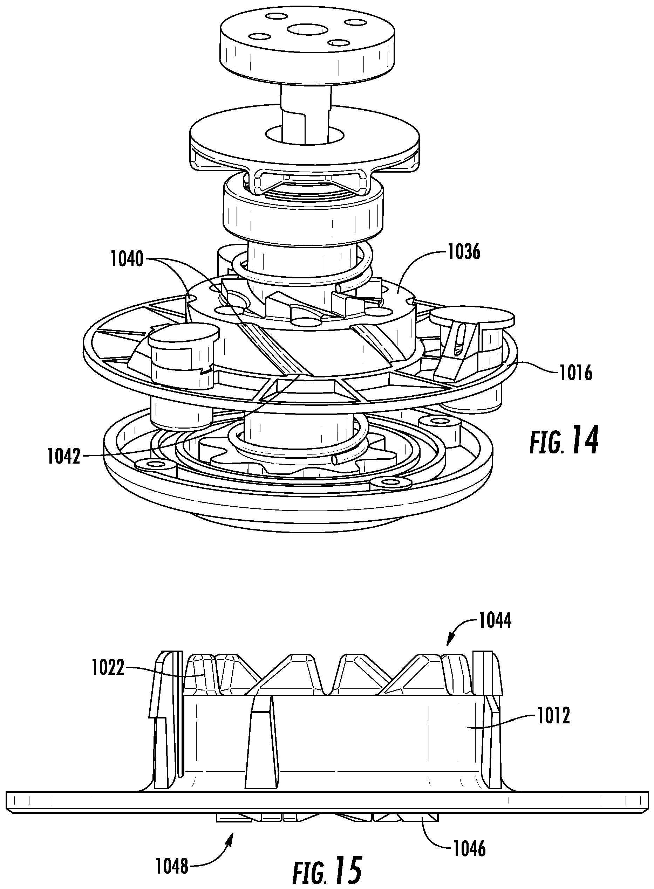

The mating interfaces 1040 can be configured to guide a complementary mating interface 1042 (FIG. 14) of at least one of the lifting element 1014 or inertial driving element 1016. In this regard, axial displacement of the complementary mating interface 1042, i.e., axial displacement of the lifting element 1014 or inertial driving element 1016, can result in simultaneous rotational displacement of the complementary mating interface 1042.

FIG. 14 illustrates an embodiment of a portion of the trimmer head 1002 as depicted in FIG. 12 with the lifting element 1014 removed. The inertial driving element 1016 is depicted as including the complementary mating interface 1042 extending into the mating interface 1040. When motor braking is applied, the inertial driving element 1016 interfaces with the lifting element 1014. The lifting element 1014 then moves helically to lift the flywheel 1012 in the axial direction.

FIG. 15 illustrates a side view of the flywheel 1012 in accordance with an exemplary embodiment. The flywheel 1012 is depicted with the rotational stops 1022 on a first axial end 1044 and a drive assembly including one or more rotational drivers 1046 disposed on a second axial end 1048. The rotational drivers 1046 can be configured to receive torque from the drive shaft 1018 through the guide 1036. More particularly, the rotational drivers 1046 can be driven by the driving portions 1038 of the guide 1036.

The rotational drivers 1046 can include a plurality of rotational drivers, such as at least two rotational drivers, such as at least three rotational drivers, such as at least four rotational drivers, such as at least five rotational drivers, such as at least six rotational drivers. The rotational drivers 1046 can be spaced apart from one another. More particularly, the rotational drivers 1046 can be equally spaced apart from one another about the central axis A. At least one of the rotational drivers 1046, such as all of the rotational drivers 1046, can interface with one or more driving portions 1038 of the guide 1036.

In an embodiment, torque transmitted from the driving portions 1038 to the rotational drivers 1046 can occur in a first rotational direction while torque transmitted from the rotational stops 1022 to the complementary stops 1024 can occur in a second rotational direction opposite the first rotational direction.

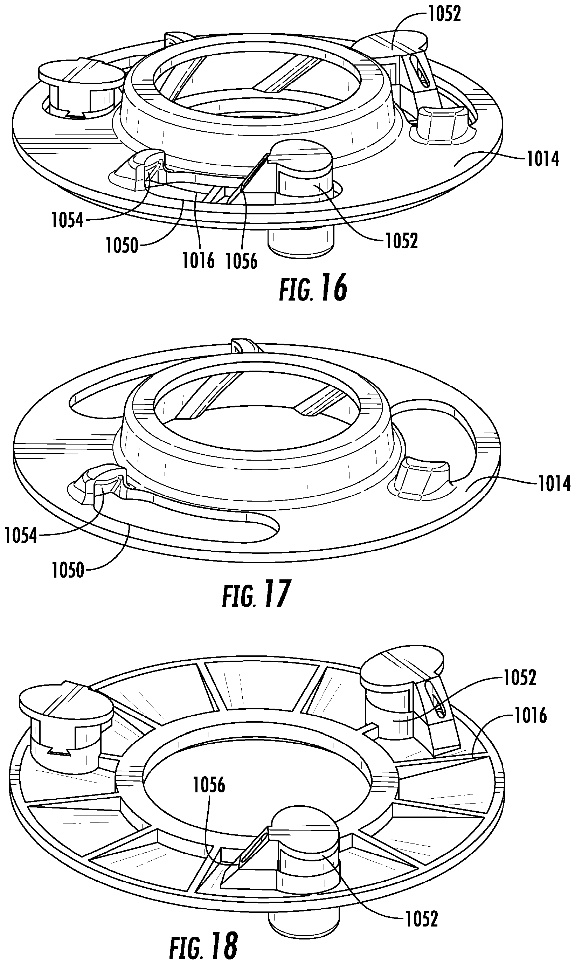

FIGS. 16 to 18 illustrate an embodiment of the lifting element 1014 and the inertial driving element 1016. FIG. 16 illustrates a perspective view of the lifting element 1014 and the inertial driving element 1016 as assembled in accordance with a particular embodiment. The lifting element 1014 includes one or more engagements, e.g., opening 1050, configured to interface with the inertial driving element 1016. More particularly, the inertial driving element 1016 can include one or more engagements, e.g., posts 1052, which interface with the engagements, e.g., openings 1050, of the lifting element 1014. While reference is made hereinafter to the openings 1050 and posts 1052, it should be understood that the interface defined by the engagements of the lifting element 1014 and the inertial driving element 1016 can include different structures.

The inertial driving element 1016 can store angular momentum during operational use of the trimmer head 1002. When the motor is braked, e.g., momentarily stopped, the angular momentum of the inertial driving element 1016 can cause the inertial driving element 1016 to rotate relative to the lifting element 1014, driving the posts 1052 into sides of the openings 1050. For instance, the posts 1052 illustrated in FIG. 16 are spaced apart from a ramp 1054 of the lifting element 1014. The ramp 1054 is disposed at a side of the opening 1050. When the motor is braked, the angular momentum of the inertial driving element 1016 can cause the inertial driving element 1016 to rotate relative to the lifting element 1014 such that the posts 1052 contact the ramp 1054. The resulting force on the ramp 1054 can have an axial component (i.e., a force component oriented parallel with the central axis A) which displaces the lifting plate along the central axis A.

In the illustrated embodiment, the posts 1052 include ramps 1056 configured to interface with the ramps 1054 of the lifting element 1014. In other embodiments, either one of the lifting element 1014 or inertial driving element 1016 can be essentially free of a ramp. That is, in certain instances, the lifting element 1014 and driving element 1016 do not both have ramps. While the ramps may assist in forming an axial component of force to displace the lifting element 1014, in certain embodiments, only one of the ramps is present.

In certain instances, the lifting element 1014 can include a plurality of ramps 1054, such as at least two ramps 1054, such as at least three ramps 1054, such as at least four ramps 1054. The ramps 1054 can be spaced apart circumferentially around the central axis A. Similarly, the inertial driving element 1016 can include a plurality of ramps 1056, such as at least two ramps 1056, such as at least three ramps 1056, such as at least four ramps 1056. In an embodiment, the number of ramps 1054 can be equal to the number of ramps 1056. The ramps 1054 or 1056 can be canted (i.e., angularly offset) from the central axis A. In such a manner, the ramps 1054 or 1056 can create an axial component of force (i.e., parallel with the central axis A).

After the braking is complete (which may occur after the ramps 1054 and 1056 are substantially, or fully, interfaced, i.e., the lifting element 1014 is substantially or fully displaced towards the complementary stops 1024), the lifting element 1014 can return to the position illustrated in FIG. 16. That is, the complementary mating interface 1042 of the lifting element 1014 can ride within the mating interface 1040 until the lifting element 1014 is disposed adjacent to the inertial driving element 1016. In this manner, the lifting element 1014 and inertial driving element 1016 may act similar to a hammer drill. Rotational force provided on the lifting element 1014 by the inertial driving element 1016 can be modified through design choice, such as, for example, selection of a satisfactory radial distance of the posts 1052 from the central axis A, weighting of the posts 1052, selection of a proper length of the openings 1050, and the like. Force provided to the lifting element 1014 by the inertial driving element 1016 can cause displacement of the cartridge 1010 which can feed trimmer line from the trimmer head 1002. The displacement of the cartridge 1010 can be limited by the aforementioned rotational stops 1022 contacting the complementary stops 1024.

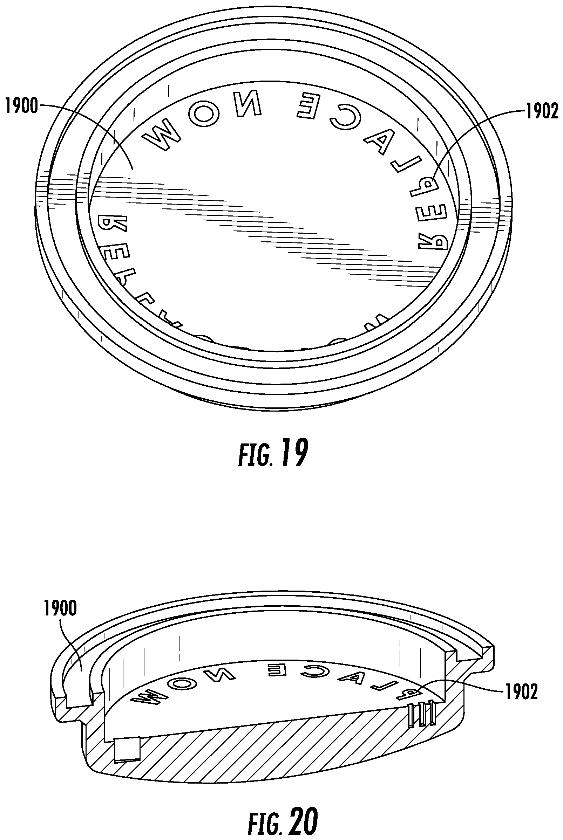

FIG. 19 is a perspective view of a glider 1900 for use at a lowermost surface of the power tool. The glider 1900 can contact the ground during use of the power tool. In an embodiment, the glider 1900 can include an indicator to indicate to an operator when the material of the glider 1900 is worn past a threshold limit. In the depicted embodiment, the indicator includes indicia 1902. The indicia 1902 can include a negative element projected into the glider 1900 from an inner surface of the glider 1900. When the material of the glider 1900 wears past a threshold amount, the negative element, e.g., the void created by the indicia 1902, can become visible. In an embodiment, the indicia 1902 may include alphanumeric characters, such as words. By way of non-limiting example, the indicia 1902 may say "REPLACE NOW" to signal to an operator that the glider 1900 is worn past a threshold amount.

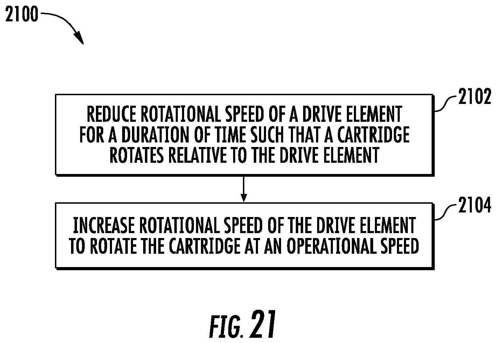

FIG. 21 illustrates a flow chart of an exemplary method 2100 of dispensing trimmer line from a cartridge in accordance with an embodiment. The method 2100 generally includes a step 2102 of reducing rotational speed of a drive element (e.g., the motor 122 or an intermediate slip element, e.g., a clutch) for a duration of time such that the cartridge rotates relative to a drive element. The step 2102 can be performed with the cartridge rotating, e.g., at an operational speed. The cartridge can dispense trimmer line during at least a portion of the duration of time occupied at step 2102. By way of example, the cartridge may be driven by the motor at an operational speed prior to step 2102. At step 2102, the speed of the motor may be reduced by at least 1%, such as by at least 5%, such as by at least 10%, such as by at least 20%, such as by at least 30%, such as by at least 40%, such as by at least 50%, such as by at least 75% to a dispense speed. Alternatively, the motor may be stopped completely (e.g., the speed of the motor may be reduced by approximately 100%) at step 2102. In an embodiment, the acceleration of the motor at step 2102, i.e., the rate of reducing the speed of the motor, may be sufficiently large enough to cause the one or more rotational drivers 140 of the subassembly 124 of skip relative to the one or more rotational drivers 134 of the housing 132. That is, the moment of inertia of the subassembly 124 may be sufficiently large such that the subassembly 124 continues rotating after the speed of the motor is reduced by a prescribed amount or at a prescribed acceleration. As the subassembly 124 skips relative to the housing 132, trimmer line may be dispensed. As noted above, this may occur only during a portion of the duration of time of step 2102. For instance, skipping may occur only after the speed of the motor is reduced by a sufficient amount. This may require, for example, a few milliseconds or even a second or two to occur. Similarly, as the moment of inertia of the subassembly 124 decreases, the subassembly 124 may again key with the motor such that the rotational drivers 134 and 140 interface and relative rotation is prevented. This may occur, for example, during the final milliseconds or even for a second or two at the end of step 2102.

The termination of step 2102 may occur after a prescribed duration of time. For instance, step 2102 may result in reduced operational speed of the motor for a prescribed duration of time, e.g., 0.5 seconds or 1 second. Alternatively, termination of step 2102 may occur upon reaching a detected condition, e.g., reaching a prescribed length of trimmer line extending from the trimmer head 102. Alternatively, termination of step 2102 may occur when the operator performs an operation, such as depressing/releasing a button or adjusting a switching.

The method 2100 can further include a step 2104 of increasing rotational speed of the drive element to again rotate the cartridge at the operational speed. In one or more embodiments, the step 2104 of increasing rotational speed can be performed using an acceleration profile or sequence configured to position the posts of the inertial drive element a furthest distance from the ramps of the lifting element. In certain instances, the acceleration profile can include a gradual acceleration to prevent impact of the posts with respect to the opening 1050. Step 2104 can occur after step 2102. Upon completing step 2104 (or during step 2104), the operator can use the power tool to perform trimming operations. Step 2102 can then be repeated as necessary to dispense the trimmer line.

In certain instances, the method 2100 can be at least partially controlled by the operator. For instance, the operator may initiate the method 2100 by acting on a user interface (e.g., a trimmer line advance interface) to dispense trimmer line. In other instances, the method 2100 may be at least partially controlled by a logic device (not illustrated) of the power tool which may detect a condition requiring dispensing of additional trimmer line. For example, the power tool may include one or more sensors configured to detect a condition upon which additional trimmer line is necessary. The logic device may actuate the method 2100 in response to the detected condition.

When the trimmer line from the cartridge is exhausted, the method 800 may further include changing the cartridge from the exhausted cartridge to a new cartridge. This operation can be performed by removing the exhausted cartridge from the trimmer head. The new cartridge can be coupled with the flywheel to form a new subassembly. The new subassembly can be inserted into the trimmer head. The actuation member can be moved to the engaged configuration and rotational speed of the subassembly can be increased to the operational speed by the drive element. Step 2102 may then be performed to dispense trimmer line from the cartridge. In certain instances, the step of inserting the new subassembly into the trimmer head can require the operator to insert the trimmer line through the openings 160 in the housing 132. In other instances, the step of inserting the new subassembly into the trimmer head can be performed automatically such that the trimmer line extends through the openings 160 in the housing 132.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. A trimmer head (1002) for a power tool (100), the trimmer head (1002) comprising:
a drive shaft (1018) defining an axis of rotation (A), the drive shaft (1018) rotatably driven by a drive element;
a cartridge (1010) including a segment of trimmer line, the cartridge (1010) being rotatable about the axis of rotation (A); and
a lifting element (1014) configured to translate in a direction along the axis of rotation (A) and selectively displace the cartridge (1010) in the direction along the axis of rotation (A)
**characterised in** further comprising:
an inertial driving element (1016) configured to displace the lifting element (1014) corresponding with reducing rotational speed of the drive element.

2. The trimmer head (1002) of claim 1, wherein the trimmer head (1002) further comprises an actuation member (1020) that selectively couples the cartridge (1010) to the drive shaft (1018), wherein the actuation member (1020) is translatable in a direction along the axis of rotation (A) between an engaged configuration and a disengaged configuration, and wherein the actuation member (1020) comprises:
an engageable portion that translates in the direction along the axis of rotation (A); and
one or more engagement pins coupled with the engageable portion and translatable in a direction generally perpendicular to the axis of rotation (A) as the engageable portion translates in the direction along the axis of rotation (A).

3. The trimmer head (1002) of claim 1, wherein the cartridge (1010) comprises a drive assembly including one or more rotational drivers (1046) configured to transmit torque in a first direction from the drive element to the cartridge (1010), and a stop assembly including one or more rotational stops (1022) configured to selectively interface with one or more complementary stops (1024) of the trimmer head (1002) to transmit torque in a second direction from the cartridge (1010) to one or more complementary stops (1024) of the trimmer head (1002).

4. The trimmer head (1002) of claim 3, wherein at least one of the lifting element (1014) and the inertial driving element (1016) comprises a ramp (1054, 1056) configured to interface with the other of the lifting element (1014) and the inertial driving element (1016) to displace the lifting element (1014) toward the one or more complementary stops (1024) of the trimmer head (1002), and wherein displacement of the lifting element (1014) displaces the cartridge (1010) a sufficient distance to engage the one or more complementary stops (1024).

5. The trimmer head (1002) of claim 3, wherein angular momentum of the inertial driving element (1016) drives the lifting element (1014) in a direction toward the cartridge (1010).

6. The trimmer head (1002) of claim 1, wherein at least one of the lifting element (1014) and inertial driving element (1016) is translatable relative to a guide (1036) defining a mating interface (1040), the at least one of the lifting element (1014) and inertial driving element (1016) having a complementary mating interface (1042) to guide the at least one of the lifting element (1014) and inertial driving element (1016) along a predetermined path when moving in the direction of the axis of rotation (A).

7. The trimmer head (1002) of claim 1, wherein the cartridge (1010) is rotatably coupled to the drive shaft (1018) through a flywheel (1012), and wherein the cartridge (1010) is rotatably keyed with the flywheel (1012).

8. A method of dispensing trimmer line from a cartridge (1010) of a trimmer head (1002) of a power tool (100), the power tool (100) including a drive element configured to rotate the cartridge (1010) along an axis of rotation (A), the method comprising:
with the cartridge (1010) rotating at an operational speed, reducing rotational speed of the drive element for a duration of time such that the cartridge (1010) rotates relative to the drive element, wherein the cartridge (1010) dispenses trimmer line during at least a portion of the duration of time; and
increasing rotational speed of the drive element to rotate the cartridge (1010) at the operational speed, wherein reducing rotational speed of the drive element causes an inertial driving element (1016) of the trimmer head (1002) to displace the cartridge (1010) in a direction along the axis of rotation (A) such that one or more rotational drivers (1046) of the cartridge (1010) displace from one or more complementary drivers of the trimmer head (1002) to allow the cartridge (1010) to rotate relative to the trimmer head (1002) to feed trimmer line from the cartridge (1010).

9. The method of claim 8, wherein the cartridge (1010) comprises one or more rotational stops(1022)configured to selectively interface with one or more complementary stops (1024) of the trimmer head (1002), and wherein displacement of the cartridge (1010) causes the one or more rotational stops(1022)to interface with the one or more complementary stops (1024) of the trimmer head (1002) to stop rotation of the cartridge (1010) with respect to the trimmer head (1002).

10. The method of claim 8, further comprising:
coupling the cartridge (1010) with a flywheel (1012) to form a subassembly;
inserting the subassembly into the trimmer head (1002); and
increasing a rotational speed of the subassembly to the operational speed before reducing rotational speed of the drive element for the duration of time.

11. The method of claim 10, wherein the trimmer head (1002) further comprises an actuation member (1020), and wherein the method further comprises:
after inserting the subassembly into the trimmer head (1002), moving the actuation member (1020) from a disengaged configuration to an engaged configuration by translating the actuation member (1020) in a direction parallel with the axis of rotation (A) towards the flywheel (1012).

12. The method of claim 8, wherein reducing rotational speed of the drive element is performed in response to a detected condition received at a logic element, the detected condition indicating that trimmer line is to be dispensed from the cartridge (1010).

13. The method of claim 8, wherein the cartridge (1010) is rotatably coupled to the drive element through a flywheel (1012), and wherein the cartridge (1010) is rotatably keyed with the flywheel (1012).

14. The method of claim 8, wherein the trimmer head (1002) comprises a lifting element (1014) configured to translate in a direction along the axis of rotation (A) when the rotational speed of the drive element is reduced and selectively displace the cartridge (1010) in the direction along the axis of rotation (A).

## Patentansprüche

1. Trimmerkopf (1002) für ein Elektrowerkzeug (100), der Trimmerkopf (1002) umfassend:
eine Antriebswelle (1018), die eine Drehachse (A) definiert, wobei die Antriebswelle (1018) durch ein Antriebselement drehbar angetrieben wird;
eine Kartusche (1010), die ein Segment eines Trimmerfadens einschließt, wobei die Kartusche (1010) um die Drehachse (A) drehbar ist; und
ein Hebeelement (1014), das konfiguriert ist, um sich in einer Richtung entlang der Drehachse (A) zu verschieben und die Kartusche (1010) in die Richtung entlang der Drehachse (A) wahlweise zu versetzen
**dadurch gekennzeichnet, dass** er ferner umfasst:
ein Trägheitsantriebselement (1016), das konfiguriert ist, um das Hebeelement (1014) entsprechend einer Verringerung der Drehgeschwindigkeit des Antriebselements zu versetzen.

2. Trimmerkopf (1002) nach Anspruch 1, wobei der Trimmerkopf (1002) ferner ein Betätigungsglied (1020) umfasst, das die Kartusche (1010) mit der Antriebswelle (1018) wahlweise koppelt, wobei das Betätigungsglied (1020) in einer Richtung entlang der Drehachse (A) zwischen einer eingerückten Konfiguration und einer ausgerückten Konfiguration verschiebbar ist, und wobei das Betätigungsglied (1020) umfasst:
einen einrückbaren Abschnitt, der sich in die Richtung entlang der Drehachse (A) verschiebt; und
einen oder mehrere Einrückungsstifte, die mit dem einrückbaren Abschnitt gekoppelt sind und in einer Richtung, die im Allgemeinen senkrecht zu der Drehachse (A) ist, verschiebbar sind, wenn sich der einrückbare Abschnitt in die Richtung entlang der Drehachse (A) verschiebt.

3. Trimmerkopf (1002) nach Anspruch 1, wobei die Kartusche (1010) eine Antriebsbaugruppe, die einen oder mehrere Drehtreiber (1046) einschließt, die konfiguriert sind, um Drehmoment in einer ersten Richtung von dem Antriebselement zu der Kartusche (1010) zu übertragen, und eine Anschlagsbaugruppe umfasst, die einen oder mehrere Drehanschläge (1022) einschließt, die konfiguriert sind, um sich mit einem oder mehreren komplementären Anschlägen (1024) des Trimmerkopfs (1002) wahlweise zu verbinden, um Drehmoment in einer zweiten Richtung von der Kartusche (1010) zu einem oder mehreren komplementären Anschlägen (1024) des Trimmerkopfs (1002) zu übertragen.

4. Trimmerkopf (1002) nach Anspruch 3, wobei mindestens eines des Hebeelements (1014) und des Trägheitsantriebselements (1016) eine Rampe (1054, 1056) umfasst, die konfiguriert ist, um sich mit dem anderen des Hebeelements (1014) und des Trägheitsantriebselements (1016) zu verbinden, um das Hebeelement (1014) zu dem einen oder den mehreren komplementären Anschlägen (1024) des Trimmerkopfs (1002) hin zu versetzen, und wobei das Versetzen des Hebeelements (1014) die Kartusche (1010) um einen ausreichenden Abstand versetzt, um den einen oder die mehreren komplementären Anschläge (1024) einzurücken.

5. Trimmerkopf (1002) nach Anspruch 3, wobei Impulsmoment des Trägheitsantriebselements (1016) das Hebeelement (1014) in einer Richtung zu der Kartusche (1010) hin antreibt.

6. Trimmerkopf (1002) nach Anspruch 1, wobei mindestens eines des Hebeelements (1014) und des Trägheitsantriebselements (1016) relativ zu einer Führung (1036) verschiebbar ist, die eine Passschnittstelle (1040) definiert, wobei das mindestens eine des Hebeelements (1014) und des Trägheitsantriebselements (1016) eine komplementäre Passschnittstelle (1042) aufweisen, um das mindestens eine des Hebeelements (1014) und des Trägheitsantriebselements (1016) entlang eines vorbestimmten Pfads beim Bewegen in der Richtung der Drehachse (A) zu führen.

7. Trimmerkopf (1002) nach Anspruch 1, wobei die Kartusche (1010) mit der Antriebswelle (1018) durch ein Schwungrad (1012) drehbar gekoppelt ist, und wobei die Kartusche (1010) mit dem Schwungrad (1012) drehbar verkeilt ist.

8. Verfahren zum Abgeben des Trimmerfadens aus einer Kartusche (1010) eines Trimmerkopfs (1002) eines Elektrowerkzeugs (100), wobei das Elektrowerkzeug (100) ein Antriebselement einschließt, das konfiguriert ist, um die Kartusche (1010) entlang einer Drehachse (A) zu drehen, das Verfahren umfassend:
wenn sich die Kartusche (1010) mit einer Betriebsgeschwindigkeit dreht, Verringern der Drehzahl des Antriebselements für eine Zeitdauer, derart, dass sich die Kartusche (1010) relativ zu dem Antriebselement dreht, wobei die Kartusche (1010) den Trimmerfaden während mindestens eines Abschnitts der Zeitdauer abgibt; und
Erhöhen der Drehgeschwindigkeit des Antriebselements, um die Kartusche (1010) mit der Betriebsgeschwindigkeit zu drehen, wobei das Verringern der Drehgeschwindigkeit des Antriebselements ein Trägheitsantriebselement (1016) des Trimmerkopfs (1002) veranlasst, die Kartusche (1010) in einer Richtung entlang der Drehachse (A) derart zu versetzen, dass ein oder mehrere Drehtreiber (1046) der Kartusche (1010) von einem oder mehreren komplementären Treibern des Trimmerkopfs (1002) versetzt werden, um zu ermöglichen, dass sich die Kartusche (1010) relativ zu dem Trimmerkopf (1002) dreht, um den Trimmerfaden aus der Kartusche (1010) zuzuführen.

9. Verfahren nach Anspruch 8, wobei die Kartusche (1010) einen oder mehrere Drehanschläge(1022)umfasst, die konfiguriert sind, um sich mit einem oder mehreren komplementären Anschlägen (1024) des Trimmerkopfs (1002) wahlweise zu verbinden, und wobei das Versetzen der Kartusche (1010) veranlasst, dass der eine oder die mehreren Drehanschläge(1022)sich mit dem einen oder den mehreren komplementären Anschlägen (1024) des Trimmerkopfs (1002) verbinden, um die Drehung der Kartusche (1010) in Bezug auf den Trimmerkopf (1002) zu stoppen.

10. Verfahren nach Anspruch 8, ferner umfassend:
Koppeln der Kartusche (1010) mit einem Schwungrad (1012), um eine Unterbaugruppe zu bilden;
Einsetzen der Unterbaugruppe in den Trimmerkopf (1002); und
Erhöhen einer Drehgeschwindigkeit der Unterbaugruppe auf die Betriebsgeschwindigkeit, bevor die Drehgeschwindigkeit des Antriebselements für die Zeitdauer verringert wird.

11. Verfahren nach Anspruch 10, wobei der Trimmerkopf (1002) ferner ein Betätigungsglied (1020) umfasst, und wobei das Verfahren ferner umfasst:
nach dem Einsetzen der Unterbaugruppe in den Trimmerkopf (1002), Bewegen des Betätigungsglieds (1020) von einer ausgerückten Konfiguration in eine eingerückte Konfiguration durch Verschieben des Betätigungsglieds (1020) in einer Richtung parallel zu der Drehachse (A) zu dem Schwungrad (1012) hin.

12. Verfahren nach Anspruch 8, wobei das Verringern der Drehgeschwindigkeit des Antriebselements als Reaktion auf einen erkannten Zustand durchgeführt wird, der an einem Logikelement empfangen wird, wobei der erkannte Zustand angibt, dass der Trimmfaden aus der Kartusche (1010) auszugeben ist.

13. Verfahren nach Anspruch 8, wobei die Kartusche (1010) mit dem Antriebselement durch ein Schwungrad (1012) drehbar gekoppelt ist und wobei die Kartusche (1010) mit dem Schwungrad (1012) drehbar verkeilt ist.

14. Verfahren nach Anspruch 8, wobei der Trimmerkopf (1002) ein Hebeelement (1014) umfasst, das konfiguriert ist, um sich in einer Richtung entlang der Drehachse (A) zu verschieben, wenn die Drehgeschwindigkeit des Antriebselements verringert wird, und die Kartusche (1010) in die Richtung entlang der Drehachse (A) wahlweise zu versetzen.

## Revendications

1. Tête de taille-bordure (1002) destinée à un outil électrique (100), la tête de taille-bordure (1002) comprenant :
un arbre d'entraînement (1018) définissant un axe de rotation (A), l'arbre d'entraînement (1018) étant entraîné en rotation par un élément d'entraînement ;
une cartouche (1010) comportant un segment de fil de taille-bordure, la cartouche (1010) pouvant tourner autour de l'axe de rotation (A) ; et
un élément de levage (1014) configuré pour bouger en translation dans une direction le long de l'axe de rotation (A) et déplacer sélectivement la cartouche (1010) dans la direction le long de l'axe de rotation (A)
**caractérisée en ce qu'**elle comprend en outre :
un élément d'entraînement inertiel (1016) configuré pour déplacer l'élément de levage (1014) correspondant à une réduction de vitesse de rotation de l'élément d'entraînement.

2. Tête de taille-bordure (1002) selon la revendication 1, dans laquelle la tête de taille-bordure (1002) comprend en outre un élément d'actionnement (1020) qui accouple sélectivement la cartouche (1010) à l'arbre d'entraînement (1018), dans laquelle l'élément d'actionnement (1020) peut être bougé en translation dans une direction le long de l'axe de rotation (A) entre une configuration en prise et une configuration désolidarisée, et dans laquelle l'élément d'actionnement (1020) comprend :
une partie pouvant être mise en prise qui bouge en translation dans la direction le long de l'axe de rotation (A) ; et
une ou plusieurs goupilles de mise en prise accouplées à la partie pouvant être mise en prise et pouvant être bougé en translation dans une direction généralement perpendiculaire à l'axe de rotation (A) à mesure que la partie pouvant être mise en prise bouge en translation dans la direction le long de l'axe de rotation (A).

3. Tête de taille-bordure (1002) selon la revendication 1, dans laquelle la cartouche (1010) comprend un ensemble d'entraînement comportant un ou plusieurs organes d'entraînement rotatifs (1046) configurés pour transmettre un couple dans une première direction de l'élément d'entraînement à la cartouche (1010), et un ensemble butée comprenant une ou plusieurs butées rotatives (1022) configurées pour établir sélectivement une interface avec une ou plusieurs butées complémentaires (1024) de la tête de taille-bordure (1002) pour transmettre un couple dans une seconde direction de la cartouche (1010) à une ou plusieurs butées complémentaires (1024) de la tête de taille-bordure (1002).

4. Tête de taille-bordure (1002) selon la revendication 3, dans laquelle au moins l'un parmi l'élément de levage (1014) et l'élément d'entraînement inertiel (1016) comprend une rampe (1054, 1056) configurée pour établir une interface avec l'autre parmi l'élément de levage (1014) et l'élément d'entraînement inertiel (1016) pour déplacer l'élément de levage (1014) vers les une ou plusieurs butées complémentaires (1024) de la tête de taille-bordure (1002), et dans laquelle le déplacement de l'élément de levage (1014) déplace la cartouche (1010) d'une distance suffisante pour entrer en prise avec les une ou plusieurs butées complémentaires (1024).

5. Tête de taille-bordure (1002) selon la revendication 3, dans laquelle un moment angulaire de l'élément d'entraînement inertiel (1016) entraîne l'élément de levage (1014) dans une direction vers la cartouche (1010).

6. Tête de taille-bordure (1002) selon la revendication 1, dans laquelle au moins l'un parmi l'élément de levage (1014) et l'élément d'entraînement inertiel (1016) peut être bougé en translation par rapport à un guide (1036) définissant une interface d'assemblage (1040), l'au moins un parmi l'élément de levage (1014) et l'élément d'entraînement inertiel (1016) ayant une interface d'assemblage complémentaire (1042) pour guider l'au moins un parmi l'élément de levage (1014) et l'élément d'entraînement inertiel (1016) le long d'un trajet prédéterminé lorsqu'il bouge dans la direction de l'axe de rotation (A).

7. Tête de taille-bordure (1002) selon la revendication 1, dans laquelle la cartouche (1010) est accouplée de manière rotative à l'arbre d'entraînement (1018) par l'intermédiaire d'un volant d'inertie (1012), et dans laquelle la cartouche (1010) est clavetée de manière rotative avec le volant d'inertie (1012).

8. Procédé de distribution de fil de taille-bordure à partir d'une cartouche (1010) d'une tête de taille-bordure (1002) d'un outil électrique (100), l'outil électrique (100) comportant un élément d'entraînement configuré pour faire tourner la cartouche (1010) le long d'un axe de rotation (A), le procédé comprenant :
avec la cartouche (1010) tournant à une vitesse opérationnelle, la réduction de la vitesse de rotation de l'élément d'entraînement pendant une durée de telle sorte que la cartouche (1010) tourne par rapport à l'élément d'entraînement, dans lequel la cartouche (1010) distribue un fil de taille-bordure pendant au moins une partie de la durée ; et
l'augmentation de la vitesse de rotation de l'élément d'entraînement pour faire tourner la cartouche (1010) à la vitesse opérationnelle, dans lequel la réduction de la vitesse de rotation de l'élément d'entraînement amène un élément d'entraînement inertiel (1016) de la tête de taille-bordure (1002) à déplacer la cartouche (1010) dans une direction le long de l'axe de rotation (A) de telle sorte qu'un ou plusieurs organes d'entraînement rotatifs (1046) de la cartouche (1010) se déplacent d'un ou plusieurs organes d'entraînement complémentaires de la tête de taille-bordure (1002) pour permettre à la cartouche (1010) de tourner par rapport à la tête de taille-bordure (1002) pour alimenter le fil de taille-bordure à partir de la cartouche (1010).

9. Procédé selon la revendication 8, dans lequel la cartouche (1010) comprend une ou plusieurs butées rotatives(1022)configurées pour établir sélectivement une interface avec une ou plusieurs butées complémentaires (1024) de la tête de taille-bordure (1002), et dans lequel un déplacement de la cartouche (1010) amène les une ou plusieurs butées rotatives(1022)à établir une interface avec les une ou plusieurs butées complémentaires (1024) de la tête de taille-bordure (1002) pour arrêter une rotation de la cartouche (1010) par rapport à la tête de taille-bordure (1002).

10. Procédé selon la revendication 8, comprenant en outre :
l'accouplement de la cartouche (1010) avec un volant d'inertie (1012) pour former un sous-ensemble ;
l'insertion du sous-ensemble dans la tête de taille-bordure (1002) ; et
l'augmentation d'une vitesse de rotation du sous-ensemble à la vitesse opérationnelle avant la réduction de la vitesse de rotation de l'élément d'entraînement pendant la durée.

11. Procédé selon la revendication 10, dans lequel la tête de taille-bordure (1002) comprend en outre un élément d'actionnement (1020), et dans lequel le procédé comprend en outre :
après insertion du sous-ensemble dans la tête de taille-bordure (1002), le mouvement de l'élément d'actionnement (1020) d'une configuration désolidarisée à une configuration en prise en bougeant en translation l'élément d'actionnement (1020) dans une direction parallèle à l'axe de rotation (A) vers le volant d'inertie (1012).

12. Procédé selon la revendication 8, dans lequel une réduction de la vitesse de rotation de l'élément d'entraînement est effectuée en réponse à une condition détectée reçue au niveau d'un élément logique, la condition détectée indiquant que le fil de taille-bordure doit être distribué à partir de la cartouche (1010).

13. Procédé selon la revendication 8, dans lequel la cartouche (1010) est accouplée de manière rotative à l'élément d'entraînement par l'intermédiaire d'un volant d'inertie (1012), et dans lequel la cartouche (1010) est clavetée de manière rotative avec le volant d'inertie (1012).

14. Procédé selon la revendication 8, dans lequel la tête de taille-bordure (1002) comprend un élément de levage (1014) configuré pour bouger en translation dans une direction le long de l'axe de rotation (A) lorsque la vitesse de rotation de l'élément d'entraînement est réduite et déplacer sélectivement la cartouche (1010) dans la direction le long de l'axe de rotation (A).
